(19) Europäisches Patentamt
European Patent Office
Office européen des brevets

(11) **EP 2 683 219 A2**

(12) **EUROPEAN PATENT APPLICATION**

(43) Date of publication:
**08.01.2014 Bulletin 2014/02**

(51) Int Cl.:
*H05B 6/70* (2006.01)    *H05B 6/68* (2006.01)
*H05B 6/66* (2006.01)

(21) Application number: **13169425.9**

(22) Date of filing: **28.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.07.2012 CN 201210232055**

(71) Applicant: **NXP B.V.**
**5656 AG Eindhoven (NL)**

(72) Inventors:
• **Cheng, Gang**
**Redhil, Surrey RH1 1SH (GB)**

• **Zhuo, YingHao**
**Redhill, Surrey RH1 1SH (GB)**
• **Qui, XiaoYong**
**Redhill, Surrey RH1 1NY (GB)**

(74) Representative: **Williamson, Paul Lewis**
**NXP Semiconductors**
**Intellectual Property and Licensing**
**Red Central**
**60 High Street**
**Redhill, Surrey RH1 1SH (GB)**

(54) **Microwave power source and method of automatic adjustement of operation frequence**

(57)    Disclosed are a microwave power source and a method of adjusting operation frequency for a microwave oven. The microwave power source comprises: a phase-locked frequency generator configured to generate a plurality of operation frequencies; a standing wave detection circuit configured to detect, for each operation frequency, a standing wave in a chamber of the oven and provide information about the standing wave; and a microcontroller configured to select one of the operation frequencies based on the information, and control the generator to generate the selected operation frequency so that the microwave oven operates at the selected operation frequency. Embodiments of the present disclosure can automatically adjust the operation frequency of the oven according to VSWR in the oven chamber.

Fig. 1

**EP 2 683 219 A2**

## Description

### TECHNICAL FIELD

The present invention relates to household appliances, and particularly to microwave power sources and methods capable of automatically adjusting operation frequencies of microwave ovens.

### BACKGROUND

With advances of semiconductor and microwave oven technologies, it is possible for a microwave power source, as a key component of microwave oven, to be fabricated with semiconductor devices instead of magnetrons. Semiconductor microwave ovens have advantages of low voltage, high safety, long lifetime, and saving copper, steel and the like required for high-voltage transformers.

Impedance match between a load and the source has a dominant impact on transmission of microwave power according to the theory of microwave power transmission. The impedance match may be measured by VSWR (Voltage to Standing Wave Ratio). In case of a mismatch, there are incident and reflected waves coexistent on a feed line. At positions of identical phase for the incident and reflected waves, voltage amplitudes of the waves add together to obtain the maximal amplitude Vmax, thereby forming a wave antinode. At positions of opposite phases for the incident and reflected waves, voltage amplitudes of the waves cancel with each other to obtain the minimal amplitude Vmin, thereby forming a wave node. The VSWR represents an amplitude ratio of a wave antinode to a wave node. The ideal value for VSWR is 1:1 in terms of energy transmission. As the VSWR increases, the reflected power grows, and the transmission efficiency decreases.

Microwave power is fed into the chamber of a microwave oven from its microwave power source, and the VSWR in the oven chamber at the oven's current operation frequency is important to the performance of the microwave power source.

The VSWR in the oven chamber will be affected by food placed in the chamber, such as material and volume of the food, and position where the food is placed. It is desirable that the operation frequency of the oven can vary with changes in the VSWR within the chamber, so as to achieve an optimal VSWR. However, conventional microwave ovens made with either magnetrons or semiconductors have fixed operation frequency of about 2.45GHz. With the fixed operation frequency, the VSWR in the oven chamber will vary as food material, volume, etc., and it is difficult for the oven to operate at the optimal condition. This will lead to reduction in heating efficiency and energy waste. Moreover, in some extreme cases where metal articles is placed in the chamber, or the chamber is damaged, resulting in a poor VSWR at the fixed operation frequency, the microwave power source may also be damaged due to excessive reflection of power.

A method is desired for adjusting the oven's operation frequency in accordance with the VSWR in the oven chamber, to solve the problems with the conventional ovens having fixed operation frequencies.

### SUMMARY

According to an embodiment of the present invention, a microwave power source for a microwave oven is provided comprising:

a phase-locked frequency generator configured to generate a plurality of operation frequencies;
a standing wave detection circuit configured to detect, for each of the plurality of operation frequencies, a standing wave in a chamber of the microwave oven and provide information about the standing wave; and
a microcontroller configured to select one of the plurality of operation frequencies based on the information about the standing wave, and control the phase-locked frequency generator to generate the selected operation frequency so that the microwave oven operates at the selected operation frequency.

According to a further embodiment of the present invention, a method for adjusting an operation frequency of a microwave oven is provided comprising:

upon power-on of the microwave oven, generating a plurality of operation frequencies, and detecting a standing wave in a chamber of the microwave oven for each of the plurality of operation frequencies to obtain information about the standing wave; and
selecting one of the plurality of operation frequencies based on the information about the standing wave, and controlling the microwave oven to operate at the selected frequency.

According to a still further embodiment of the present invention, a method for adjusting rated operating power of a microwave oven is provided comprising:

during fabrication of the microwave oven, adjusting the output power of the microwave oven to the rated power by adjusting the gain value of a first gain control circuit of the microwave oven while maintaining the gain value of a second gain control circuit of the microwave oven at its largest value, and fixing the adjusted gain value of first gain control circuit; and

during use of the microwave oven, adjusting the in-use output power of the microwave oven by adjusting the gain value of the second gain control circuit.

## BRIEF DESCRIPTION OF THE DRAWINGS

The above and other aspects of the present invention will be more apparent from the following description of example embodiments with reference to accompanying drawings, in which:

Fig. 1 is a schematic block diagram of a microwave power source according to an embodiment of the present disclosure;

Fig. 2 is a schematic block diagram of a phase-locked frequency generator;

Fig. 3 is a schematic block diagram of a standing wave detection circuit;

Fig. 4 is a schematic block diagram of a microwave power source according to another embodiment of the present disclosure in a case that a microstrip coupler is used as a directional coupler of a standing wave detection circuit;

Fig. 5 is a schematic block diagram of a microwave power source according to another embodiment of the present disclosure in a case that a chamber coupler is used as a directional coupler of a standing wave detection circuit;

Fig. 6 is a schematic block diagram of a microwave amplifier;

Fig. 7 is a schematic block diagram of a driving amplifier; and

Fig. 8 is a flow chart showing a method of automatically adjusting operation frequencies of a microwave oven according to an exemplary embodiment of the present disclosure.

## DETAILED DESCRIPTION OF THE PREFERRED EMBODIMENTS

Example embodiments according to the present disclosure will be described in detail with reference to the figures for better understanding by a person skilled in the art. The example embodiments may be implemented in different forms, and the present disclosure is not limited to those shown in the figures. Detailed description of known components or steps is omitted here, to avoid obscuring the present invention. In the figures, like reference numbers denote similar components.

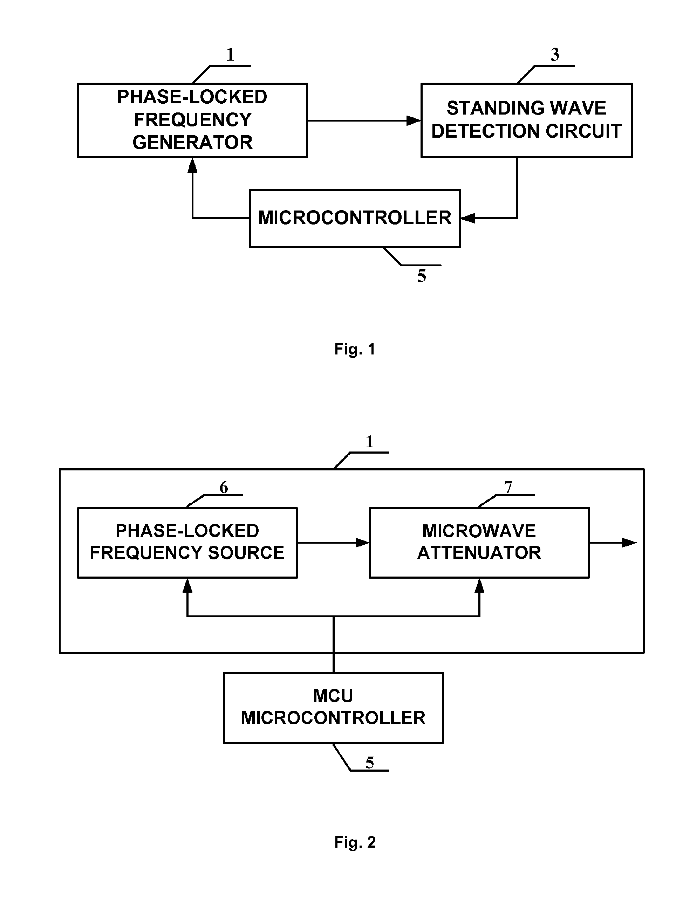

Fig. 1 is a schematic block diagram of a microwave power source for a microwave oven according to an embodiment of the present disclosure. The microwave power source may include a phase-locked frequency generator 1, a standing wave (SW) detection circuit 3 and a microcontroller 5. The SW detection circuit 3 feeds information about a standing wave within the chamber of the oven to the microcontroller 5, which controls to adjust operation frequencies of the oven according to the SW information. The microcontroller 5 may be a MCU. After power-on of the oven, the phase-locked frequency generator 1 generates a plurality of operation frequencies. The SW detection circuit 3 detects, for each operation frequency, a standing wave within the oven chamber and provides the SW information. The microcontroller 5 selects one of the operation frequencies based on the SW information, and controls the phase-locked frequency generator 1 to generate the selected operation frequency, so as to make the oven operate at the selected operation frequency. In an embodiment, the microcontroller 5 may compute a VSWR for each operation frequency, and select an operation frequency corresponding to the minimal VSWR among the computed VSWRs. In this way, the microwave power source may automatically adjust operation frequencies of the oven before the oven enters its operation mode of heating food. For example, upon the power-on of the microwave oven, the microwave power source may detect the standing wave within the oven chamber, find a frequency corresponding to the  minimal VSWR and adjust the oven to operate at the found frequency. This may maximize microwave heating efficiency of the oven, and solve the problem of low heating efficiency with conventional fixed-frequency microwave ovens.

In an embodiment, the phase-locked frequency generator 1 may generate a plurality of operation frequencies over a preset range in a stepwise manner. For example, the step size may be 10MHz, and the range may be 2.35 to 2.55 GHz.

In an embodiment, the microcontroller 5 may further compare the computed minimal VSWR with a preset safe VSWR, and control to issue a warning indicating a high VSWR, if the minimal VSWR is larger than the safe VSWR. Only when the minimal VSWR is not larger than the safe VSWR, the microcontroller 5 selects the operation frequency corresponding to the minimal VSWR. The safe VSWR may be preset as 10:1. If the computed minimal VSWR is larger than 10:1, a high VSWR warning may be issued in the form of electric signal, optical signal or sound signal. If the computed minimal VSWR is equal to or less than 10:1, the operation frequency corresponding to the minimal VSWR may be selected so that the oven may operate at the selected frequency. In this way, it is possible to ensure that the VSWR in the chamber is at a normal range before the microwave power source outputs higher power. This can prevent the microwave power source as a key component from being damaged by any excessive VSWR, and also maximize heating efficiency.

In an embodiment, the microcontroller 5 may compute a VSWR for each of the frequencies over the preset range, and record each frequency and its corresponding VSWR in a table of frequency-VSWR correspondence. This table may be, for example, recorded in a storage device internal or external to the microcontroller 5.

Fig. 2 is a schematic block diagram of the phase-locked frequency generator 1 shown in Fig. 1. The phase-locked frequency generator 1 may include a phase-locked frequency source 6 and a microwave attenuator 7. Under control of the microcontroller 5, the phase-locked frequency source 6 may generate operation frequencies for the microwave oven, and output respective microwave signals.

The operation frequencies may be generated by changing the frequencies stepwise over a preset range. The microwave signals from the phase-locked frequency source 6 are inputted to the microwave attenuator 7 and outputted after being attenuated. The microwave attenuator 7 may have two operation states of a low attenuation state and a high attenuation state. As an example, the attenuation factor in the low attenuation state may be 0dB, and the attenuation factor in the high attenuation state may be 10dB. Which operation state the attenuator 7 will enter is controlled by the microcontroller 5. The microwave attenuator 7 may be a digital control attenuator or an electric regulation attenuator, or may be implemented to switch between different attenuation paths by a dual-pole switch.

In an embodiment, during adjustment of operation frequency, such as upon power-on of the microwave oven, the microcontroller 5 may control the microwave attenuator 7 to enter the high attenuation state. In this way, a solid state power amplifier of the microwave oven may operate in a low power state while the SW detection circuit detects the standing wave in the oven chamber, and may be prevented from being damaged due to excessive VSWR in the oven chamber.

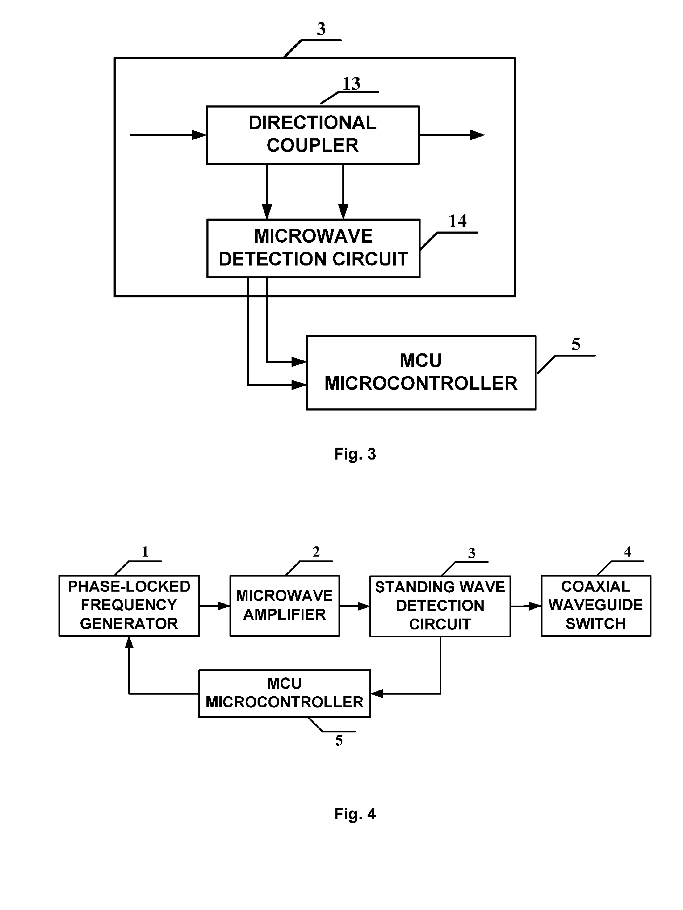

Fig. 3 is a schematic block diagram of the SW detection circuit 3 shown in Fig. 1. The SW detection circuit 3 may include a directional coupler 13 and a microwave detection circuit 14. The directional coupler 13 may sample forward and reflected coupling power of microwave fed into the oven chamber, and provide the sampled coupling power to the microwave detection circuit 14. The microwave detection circuit 14 may convert each of the sampled forward and reflected coupling power into a DC voltage, and provide the DC voltages to the microcontroller 5 as the SW information.

In an embodiment, the directional coupler 13 may sample the forward and reflected coupling power at a preset ratio (e.g., one thousandth) to obtain a forward coupling power sample Pf and a reflected coupling power sample Pr. The microwave detection circuit 14 may convert Pf and Pr into DC voltages, respectively. The directional coupler 13 may be implemented as a high-isolation bidirectional coupler, or as two unidirectional couplers for coupling forward and reflected microwave power, respectively. The directional coupler 13 may be in the form of microstrip or chamber coupler. During the process of frequency adjustment, the microcontroller 5 may derive the power values Pf and Pr from the voltages provided by the microwave detection circuit 14 for each frequency generated by the phase-locked frequency generator 1, and compute a reflection coefficient with the following formula (1):

$$\Gamma = \sqrt{\frac{P_f}{P_r}} \qquad\qquad (1)$$

Then, the microcontroller 5 may computer the VSWR with the following formula (2):

$$VSWR = \frac{1 + |\Gamma|}{1 - |\Gamma|} \qquad\qquad (2)$$

The microcontroller 5 may record each frequency and its corresponding VSWR as described above.

In an embodiment, the microwave detection circuit 14 may be implemented as a Shottky wave detection diode or a microwave detection chip (e.g., AD8313, AD8362). The DC voltages representing Pf and Pr may be subjected to analog-to-digital conversion (ADC) to be converted into digital quantities. The ADC conversion may be implemented by a separate dedicated ADC chip, or as a function module integrated into the microcontroller 5. In the latter case, the microcontroller 5 may be implemented as, for example, AVR Single Chip Micyoco ATMEGA 8 having an integrated ADC.

Fig. 4 is a schematic block diagram of a microwave power source according to another embodiment of the present disclosure in a case that a microstrip coupler is used as the directional coupler 13 of the SW detection circuit 3. In addition to the components (denoted by the same reference numbers) shown in Fig. 1, the microwave power source of Fig. 4 further comprises a microwave amplifier 2 and a coaxial waveguide switch 4. The microwave amplifier 2 may be arranged between the phase-locked frequency generator 1 and the SW detection circuit 3, and may be configured to amplify power of low-power microwave signals from the frequency generator 1, so that the microwave signals can be used for heating food or other objects placed in the oven chamber. The coaxial waveguide switch 4 may switch a coaxial output port of the SW detection circuit 3 using a microstrip coupler to a waveguide input port of the microwave.

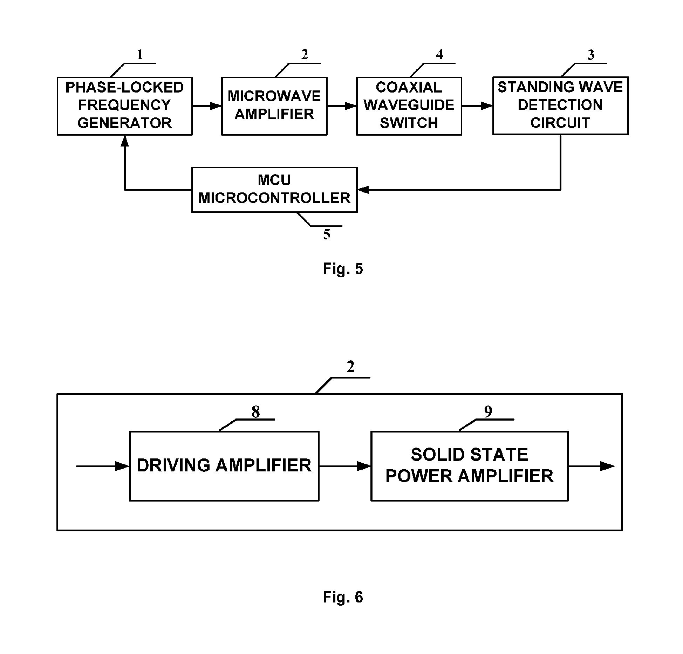

Fig. 5 is a schematic block diagram of a microwave power source according to another embodiment of the present disclosure in a case that a chamber coupler is used as the directional coupler 13 of the SW detection circuit 3. In this case, the coaxial waveguide switch 4 is placed before the SW detection circuit 3 as shown in Fig. 5.

The microwave amplifier 2 primarily functions to amplify low power microwave signals generated by the frequency generator 1 in order to obtain a sufficient microwave power for heating, for example, 600 Watts. Fig. 6 is a schematic block diagram of the microwave amplifier 2 shown in Fig. 4, which includes a driving amplifier 8 and a solid state power amplifier 9 successively connected. The driving amplifier 8 is connected to the phase-locked frequency generator 1. The solid state power amplifier 9 is connected to the directional coupler 13 and further to the coaxial waveguide switch 4 via the directional coupler 13 (as shown in Fig. 4), or the solid state power amplifier 9 is connected to the coaxial waveguide switch 4 and further to t directional coupler 13 via the coaxial waveguide switch 4 (as shown in Fig. 5).

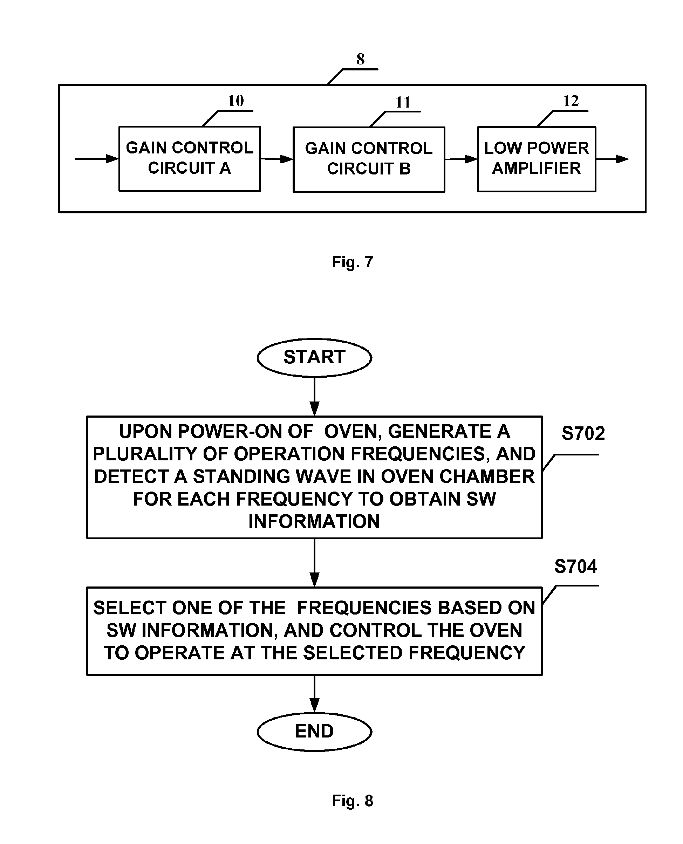

Fig. 7 is a schematic block diagram of the driving amplifier 8. The driving amplifier 8 may include gain control circuits A 10 and B 11, and a microwave low power amplifier 12. The gain control circuit A 10 may be sued to adjust the rated output power of the microwave oven, and the gain control circuit B 11 may be used to adjust the actual output power of the microwave oven during its operation. The microwave low power amplifier 12 may be used to amplify power of microwave signals. In particular, the gain control circuit A 10 may be used to adjust the rated output power of the microwave oven during fabrication of the oven, that is, before the oven is shipped away from a fabrication plant. The gain control circuit B 11 may be used by a user or consumer to adjust the in-use output power of the oven. At the fabrication stage, microwave ovens produced in the same production line may have different output powers due to inconsistency in device, circuit and/or process. Some ovens may have excessive output power larger than the rated power, and output power for other ovens may not reach the rated power. In order to ensure that every microwave oven outputs the rated power and avoid excessive output power, it is necessary to adjust the rated power for each microwave oven before it is shipped away from the fabrication plant. The adjustment may include, with the gain value of the gain control circuit B 11 being maintained in its maximum, adjusting the gain value of the gain control circuit A 10 so that the output power of the oven reaches the rated power. Then, the gain value of the gain control circuit A 10 is fixed. A user may adjust only the gain control circuit B 11, for example, via a user interface, in order to adjust the oven's in-use output power. The gain control circuits A 10 and B 11 may be variable microwave attenuators, or variable-gain microwave amplifiers, or any circuits that have adjustable gain or amplifying gain. The relative positions of the gain control circuits A 10, B 11 and the microwave low power amplifier 12 may change. For example, the microwave low power amplifier 12 may be arranged between the gain control circuits A 10 and B 11, or before or after the two gain control circuits.

The solid state power amplifier 9 may use a microstrip for impedance match. Because the operating power of a microwave oven is so high that a 50 Ohm microstrip cannot endure the high-power microwave signals, the microstrip between the SW detection circuit 3 and the coaxial waveguide switch 4 has impedance less than 50 Ohm when the a microstrip coupler is used as the directional coupler 13 as shown in Fig. 4. Such microstrip is wider and can endure higher power. When a chamber coupler is used as the directional coupler 13 as shown in Fig. 5, the microstrip between the microwave amplifier 2 and the coaxial waveguide switch 4 may have impedance less than 50 Ohm. Again, such microstrip is wider and can endure higher power. In an embodiment, a 35Ohm microstrip may be used. When made from a material of dielectric constant 3.5 and with a width of 2.9mm, the 35Ohm microstrip will have a power capacity substantially greater than that of a 50Ohm microstrip.

The foregoing describes the microwave power source and its components according to the example embodiments of the present disclosure. Fig. 8 is a flow chart showing a method of automatically adjusting operation frequencies of a microwave oven according to an exemplary embodiment of the present disclosure.

As above mentioned, the VSWR within the oven chamber will be affected or changed by food placed in the chamber, such as material and volume of the food, and position where the food is placed. In view of the changing VSWR, the present disclosure provides a method of SW detection and frequency adjustment upon power-on of the oven. As shown in Fig 8, the method may include step S702 of upon power-on of the microwave oven, generating a plurality of operation frequencies, and detecting a standing wave in a chamber of the microwave oven for each of the plurality of operation frequencies to obtain the SW information. In this step, the microcontroller 5 may control the phase-locked frequency generator 1 to generate an oscillating frequency, which may be amplified by the microwave amplifier 2 and then outputted into the chamber of the oven. The SW detection circuit 3 may detect the SW in the oven chamber to provide DC voltages representing the forward and reflected coupling power Pf and Pr as the SW information.

The method may further include step S704 of selecting one of the plurality of operation frequencies based on the SW information, and controlling the microwave oven to operate at the selected frequency. In this step, the microcontroller 5 may receive the DC voltages representing the forward and reflected coupling power Pf and Pr from the SW detection circuit 3. The microcontroller 5 may compute a VSWR for the current operation frequency based on the DC voltages, and record the current frequency and its corresponding VSWR. Then, the microcontroller 1 may control the phase-locked frequency generator 1 to generate a further operation frequency by changing the current frequency in a stepwise manner. The above detection and computation processes may be performed for the further frequency, which may be recorded with its corresponding VSWR. The generation, detection, computation and recording processes may be repeated for each frequency generated over a preset frequency range, and a frequency-VSWR correspondence table may be obtained. The microcontroller 5 may select one of the frequencies corresponding to the minimal VSWR from the table, and control the phase-locked frequency generator 1 to generate the selected frequency so that the oven operates at this frequency.

In an embodiment, the method may further includes a step in which the microcontroller 5 may compare the computed minimal VSWR with a preset safe VSWR, and control to issue a warning indicating a high VSWR, if the minimal VSWR is larger than the safe VSWR. If the minimal VSWR is not larger than the safe VSWR, the microcontroller 5 selects the operation frequency corresponding to the minimal VSWR.

In an embodiment, upon power-on of the microwave oven, the microcontroller 5 may control the microwave attenuator 7 to enter the high attenuation state. In this way, a final-stage power amplifier of the microwave oven may operate in a low power state while the SW detection circuit detects the standing wave in the oven chamber, and may be prevented from being damaged due to excessive VSWR in the oven chamber.

The example embodiments of the present disclosure have been described above. It should be noted that the present disclosure is not limited to the example embodiments. A person skilled in the art will appreciate that structures and details in the present disclosure may be modified in various manner without departing from the principle of the present disclosure.

## Claims

1.  A microwave power source for a microwave oven, comprising:

    a phase-locked frequency generator configured to generate a plurality of operation frequencies;
    a standing wave detection circuit configured to detect, for each of the plurality of operation frequencies, a standing wave in a chamber of the microwave oven and provide information about the standing wave; and
    a microcontroller configured to select one of the plurality of operation frequencies based on the information about the standing wave, and control the phase-locked frequency generator to generate the selected operation frequency so that the microwave oven operates at the selected operation frequency.

2.  The microwave power source of claim 1, wherein when the microwave oven is powered on, the standing wave detection circuit performs the detection, and the microcontroller performs the selection and control, to adjust the operation frequency of the microwave oven.

3.  The microwave power source of claim 1, wherein the microcontroller is further configured to compute a Voltage to Standing Wave Ratio (VSWR) for each of the operation frequencies based on the information about the standing wave, and to select one of the operation frequencies corresponding to the minimal VSWR among the computed VSWRs.

4.  The microwave power source of claim 1, wherein the phase-locked frequency generator is further configured to generate the plurality of operation frequencies within a preset range in a stepwise manner,
    The microcontroller is further configured to compute a VSWR for each of the operation frequencies, and to record each operation frequency and its corresponding VSWR in a frequency-VSWR correspondence table.

5.  The microwave power source of claim 3, wherein the microcontroller is further configured to:

    compare the minimal VSWR with a preset safe VSWR,
    control to issue a warning indicating a high VSWR, if the minimal VSWR is larger than the safe VSWR, and

select the operation frequency corresponding to the minimal VSWR, if the minimal VSWR is not larger than the safe VSWR.

6. The microwave power source of claim 1, wherein the phase-locked frequency generator comprises:

a phase-locked frequency source configured to generate the plurality of operation frequencies under control of the microcontroller, and to output microwave signals at the plurality of operation frequencies; and
a microwave attenuator configured to operate in a low attenuation state or a high attenuation state to attenuate the microwave signals from the phase-locked frequency source under control of the microcontroller.

7. The microwave power source of claim 2, wherein the microwave attenuator is controlled by the microcontroller to operate in a high attenuation state during adjustment of the operation frequency of the microwave oven.

8. The microwave power source of claim 1, wherein the standing wave detection circuit comprises:

a directional coupler configured to sample forward coupling power and reflected coupling power of the standing wave in the chamber of the microwave oven; and
a microwave detection circuit configured to convert each of the forward coupling power and the reflected coupling power sampled by the directional coupler into DC voltages, and to provide the DC voltages to the microcontroller as the information about the standing wave.

9. The microwave power source of claim 8, further comprising: a microwave amplifier arranged between the phase-locked frequency generator and the standing wave detection circuit and configured to amplify power of the microwave signals from the phase-locked frequency generator for use in heating.

10. The microwave power source of claim 9, further comprising: a coaxial waveguide switch arranged before or after the standing wave detection circuit and configured to switch the microwave signals from a coaxial port to a waveguide port.

11. The microwave power source of claim 10, wherein the microwave amplifier comprises a driving amplifier and a solid state power amplifier successively connected,
the driving amplifier is connected to the phase-locked frequency generator,
if a microstrip coupler is used as the directional coupler of the standing wave detection circuit, the solid state power amplifier is connected to the directional coupler, and further to the coaxial waveguide switch via the directional coupler,
if a chamber coupler is used as the directional coupler of the standing wave detection circuit, the solid state power amplifier is connected to the coaxial waveguide switch, and further to the standing wave detection circuit via the coaxial waveguide switch.

12. The microwave power source of claim 11, wherein the driving amplifier comprises:

a first gain control circuit configured to adjust rated output power of the microwave oven,
a second gain control circuit configure to adjust in-use output power of the microwave oven, and
a microwave low power amplifier configured to amplify power of the microwave signals.

13. The microwave power source of claim 12, wherein during fabrication of the microwave oven, the output power of the microwave oven is adjusted to the rated output power by adjusting the gain value of the first gain control circuit while maintaining the gain value of the second gain control circuit at its largest value, and then the adjusted gain value of first gain control circuit is fixed.

14. The microwave power source of claim 12, wherein during use of the microwave oven, a user can adjust the in-use output power of the microwave oven by adjusting the gain value of the second gain control circuit.

15. The microwave power source of claim 12, wherein the solid state power amplifier is connected to a coaxial port via a microstrip, and further to the coaxial waveguide switch via the coaxial port,
the microstrip has an impedance less than 50 Ohm.

16. A method for adjusting an operation frequency of a microwave oven, the method comprising:

upon power-on of the microwave oven, generating a plurality of operation frequencies, and detecting a standing wave in a chamber of the microwave oven for each of the plurality of operation frequencies to obtain information about the standing wave; and

selecting one of the plurality of operation frequencies based on the information about the standing wave, and controlling the microwave oven to operate at the selected frequency.

17. The method of claim 16, wherein selecting one of the plurality of operation frequencies comprises: computing a Voltage to Standing Wave Ratio (VSWR) for each of the operation frequencies based on the information about the standing wave, and selecting one of the operation frequencies corresponding to the minimal VSWR among the computed VSWRs.

18. The method of claim 17, wherein selecting one of the plurality of operation frequencies further comprises: comparing the minimal VSWR with a preset safe VSWR; issuing a warning indicating a high VSWR, if the minimal VSWR is larger than the safe VSWR; and selecting the operation frequency corresponding to the minimal VSWR, if the minimal VSWR is not larger than the safe VSWR.

19. A method for adjusting rated operating power of a microwave oven, the method comprising:

during fabrication of the microwave oven, adjusting the output power of the microwave oven to the rated power by adjusting the gain value of a first gain control circuit of the microwave oven while maintaining the gain value of a second gain control circuit of the microwave oven at its largest value, and fixing the adjusted gain value of first gain control circuit; and

during use of the microwave oven, adjusting the in-use output power of the microwave oven by adjusting the gain value of the second gain control circuit.

**Fig. 1**

**Fig. 2**

Fig. 3

Fig. 4

Fig. 5

Fig. 6

**8**

| GAIN CONTROL CIRCUIT A | GAIN CONTROL CIRCUIT B | LOW POWER AMPLIFIER |
|---|---|---|
| 10 | 11 | 12 |

Fig. 7

START

UPON POWER-ON OF OVEN, GENERATE A PLURALITY OF OPERATION FREQUENCIES, AND DETECT A STANDING WAVE IN OVEN CHAMBER FOR EACH FREQUENCY TO OBTAIN SW INFORMATION — S702

SELECT ONE OF THE FREQUENCIES BASED ON SW INFORMATION, AND CONTROL THE OVEN TO OPERATE AT THE SELECTED FREQUENCY — S704

END

Fig. 8